# EUROPEAN PATENT SPECIFICATION

(11) **EP 3 842 286 B1**
(45) Date of publication and mention of the grant of the patent: **26.10.2022**
(21) Application number: 19868003.5
(22) Date of filing: 05.11.2019
(51) Int. Cl.: B60P 3/335, B60P 3/32, B62D 29/02, B62D 63/06

(54) **WOODEN TRAVEL-TRAILER AND METHOD FOR MANUFACTURING SAME**
HOLZWOHNWAGEN UND VERFAHREN ZUR HERSTELLUNG DAVON
CARAVANE EN BOIS ET SON PROCÉDÉ DE FABRICATION

(30) Priority: 27.09.2018 JP 2018182139
(43) Date of publication of application: 30.06.2021
(73) Proprietor: Tagami, Haruhiko, Nakatsu-shi, Oita 871-0314 (JP)
(72) Inventor: Tagami, Haruhiko, Nakatsu-shi, Oita 871-0314 (JP)
(74) Representative: Hoffmann Eitle
(86) International application number: PCT/IB2019/059465
(87) International publication number: WO 2020/065640

(56) References cited:
- DE-U1-202015 106 829
- FR-A1- 3 057 236
- GB-A- 427 857
- JP-A- S4 744 817
- JP-A- 2013 019 208
- JP-A- 2018 040 159
- JP-U- 3 065 474
- KR-B1- 101 406 687

## Description

### Technical Field

The present invention relates to a wooden house trailer that is towed and transported to a destination by an automobile, and that is installed and used at the destination, and its manufacturing method, and more specifically, a wooden house trailer that is more flexible than conventional house trailers, and that has a rounded shape, and a method of manufacturing the same.

### Background Art

The house trailer is towed and transported to the destination by an automobile, and that is installed and used at the destination. In addition to use for leisure activities such as a camping car at a campsite and as a business store such as a fast food store, in recent years, it has come to be used as an emergency facility such as a temporary housing for disasters and a simple accommodation facility by moving it to the site.

In the United States and Europe, it has been customary for about 200 years to spend weekends and long vacations at resorts using the house trailer. The house trailer used at this time is a modified trailer carrier that can be moved by a towing vehicle, and is a mobile house as a living space in which housing equipment such as a bed, a toilet, a table, and a sink is installed in the box-type truck loading room.

This type of house trailer is generally angular in shape and manufactured by assembling painted hard aluminum alloy panels. Since it has problems that 1) the exterior surface is easily soiled, 2) the heat retention and sound insulation are poor, and 3) it does not give Japanese people familiar feeling, the wooden house trailers as disclosed in JP 2004-136764 A, JP 2008-279908 A, and JP 2011-093484 A are provided.

As shown in Figs. 6 to 8, the wooden house trailers as disclosed in JP 2004-136764 A, JP 2008-279908 A, and JP 2011-093484 A are wooden house trailers 30 having a wooden living part mainly composed of wood on a chassis provided with members, such as wheels and a towing member, necessary for towing and transportation, and has improved livability, but it has the disadvantage of being easily damaged by vibration/impact and wind pressure when towing and transporting it to a destination by an automobile, compared to the box-type truck loading room. Specifically, when it is required to quickly move the wooden house trailer as an emergency facility such as a temporary housing for disasters and a simple accommodation facility to the site through the highway, likelihood of breakage increases due to the large vibration/impact and wind pressure that accompany driving at high speeds.

The inventors of the present invention have earnestly studied the solution to such a problem and have made the present invention.

Further prior art can be found in DE 20 2015 106829 U1 disclosing a caravan comprising a chassis and a floor panel, as well as an external supporting frame made of load-bearing wooden uprights which hold the planking forming the roof and the side walls, wherein at least part of the wooden uprights are wooden trusses which in turn each consist of several layers of wood glued together.

### Summary of Invention

### Technical Problem

As described above, the wooden house trailer has a drawback that it is easily damaged by vibration/impact and wind pressure when towing and transporting it to a destination by an automobile. This drawback does not cause a big problem when using the wooden house trailer for leisure, business stores, etc., but when it is required to quickly move the wooden house trailer as an emergency facility such as a temporary housing for disasters and a simple accommodation facility to the site through the highway, likelihood of breakage increases due to the large vibration/impact and wind pressure that accompany driving at high speeds.

The present invention aims to improve the above-mentioned drawback of the wooden house trailer, and an object of the present invention is to provide a wooden house trailer which is not easily damaged by vibration/impact and wind pressure during towing/transportation, and a method of manufacturing the wooden house trailer.

### Solution to Problem

In order to solve the above problems, the inventors have made the present invention as a result of diligent studies. The invention is defined in the appended claims.

### Advantageous Effects of Invention

In the wooden living part of the wooden house trailer of the present invention, the central skeleton portion and the side skeleton portion can be bent back and forth and left and right, and in addition, since the wooden boards of the wall portion bonded to these skeleton portions using an elastic adhesive can also follow this, flexibility can be imparted to the entire wooden living part. Therefore, it is possible to prevent the wooden living part from being damaged by vibration/impact when moving it by towing and transportation. Further, by changing the shape of the wooden living part from the conventional angular one to a rounded one, it is possible to prevent the wooden living part from being damaged by wind pressure.

Further, the method of manufacturing a wooden house trailer of the present invention makes it possible to manufacture a wooden house trailer having an excellent effect as described above.

### Brief Description of Drawings

Fig. 1 shows an embodiment of a wooden house trailer of the present invention, and is a schematic external diagram of the wooden house trailer as viewed from the side.
Fig. 2 is a schematic external diagram of the wooden house trailer of Fig. 1 as viewed from the rear.
Fig. 3 is a schematic external diagram of the wooden house trailer of Fig. 1 as viewed from the front.
Fig. 4 is a schematic external diagram showing a plurality of annular wooden columns forming the central skeleton portion of the wooden house trailer of Fig. 1.
Fig. 5 is a schematic diagram showing a situation in which a plurality of wooden boards is fixed to a wooden column of the central skeleton portion or the side skeleton portion with an elastic adhesive, Fig. 5(a) shows the unstressed situation, and Fig. 5(b) shows the stressed situation.

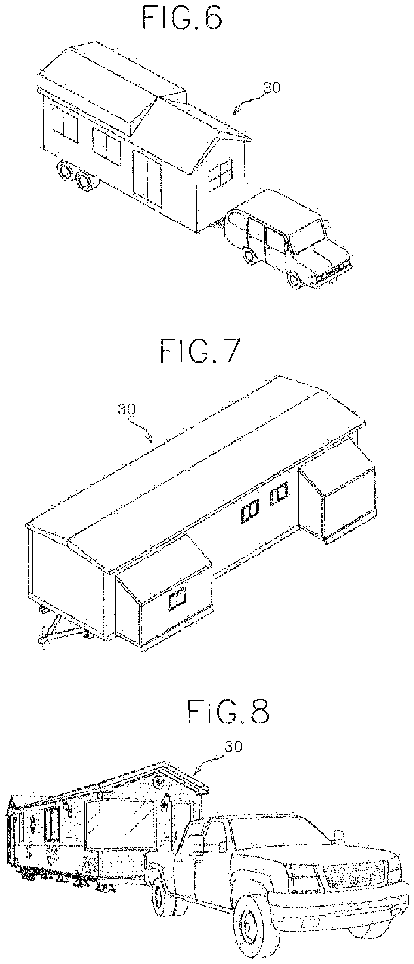

Fig. 6 exhibits the Fig. 4 of JP 2004-136764 A showing a conventional wooden house trailer.
Fig. 7 exhibits the Fig. 1 of JP 2008-279908 A showing a conventional wooden house trailer.
Fig. 8 exhibits the Fig. 3 of JP 2011-093484 A showing a conventional wooden house trailer.

### Description of Embodiments

Hereinafter, embodiments of the present invention will be described in detail with reference to the accompanying drawings, but the present invention is not limited thereto.

In addition, in the scope of claims and the specification of this case, the direction in which the wooden house trailer is carried by towing and transportation is referred to as the "front", the direction opposite to it is referred to as the "rear", and the direction orthogonal to this front-rear direction in the horizontal plane is referred to as the "left-right direction" or "side", and the vertical direction is referred to as the "up-down direction".

### <Main features of the wooden house trailer of the present invention and its manufacturing method>

First, the main features of the wooden house trailer of the present invention and the manufacturing method thereof (hereinafter, also referred to as "the present invention") will be described.

The wooden house trailer of the present invention is characterized by the structure of a wooden living part provided on the chassis, and specifically, includes as a main feature at least
a) a central skeleton portion formed by disposing in a front-rear direction a plurality of annular wooden columns each formed by bending a wooden column, and fixing the annular wooden columns directly or indirectly to the chassis,
b) a side skeleton portion that connects in an up-down direction the annular wooden columns disposed on both sides of the central skeleton portion in a left-right direction, where the side skeleton portion includes a plurality of wooden columns,
c) a front wall portion, a ceiling portion and a rear wall portion formed by fixing a plurality of wooden boards with an elastic adhesive in a direction substantially orthogonal to the central skeleton portion, and
d) a side wall portion formed by fixing a plurality of wooden boards with an elastic adhesive in a direction substantially orthogonal to the side skeleton portion.

It has an excellent effect in that by giving flexibility to the entire wooden living part of the wooden house trailer, it is possible to prevent the wooden living part from being damaged due to vibration and shock when moving it by towing and transportation, and furthermore, by making the shape of the wooden living part rounded, it is possible to prevent the wooden living part from being damaged due to wind pressure. It is possible to quickly move the wooden house trailer as a facility such as a temporary housing and a simple accommodation facility in an emergency such as a disaster to the site through the highway.

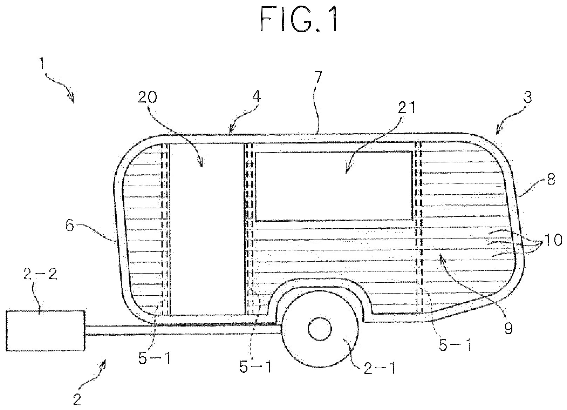

The main features of the present invention will be described with reference to Figs. 1 to 5. ◊

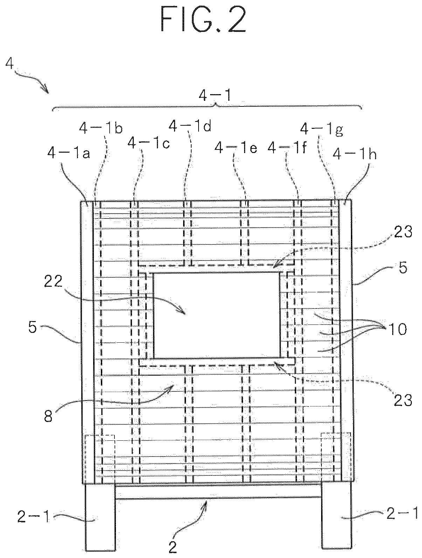

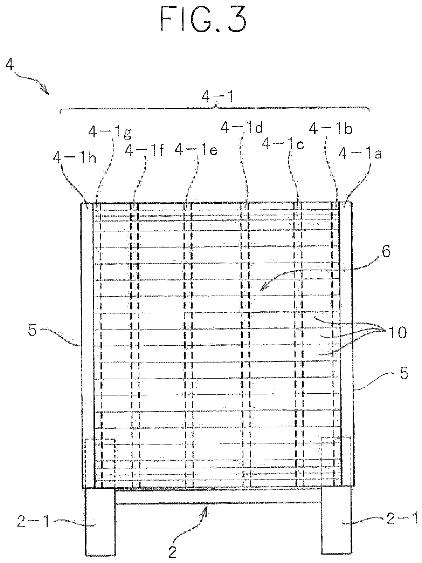

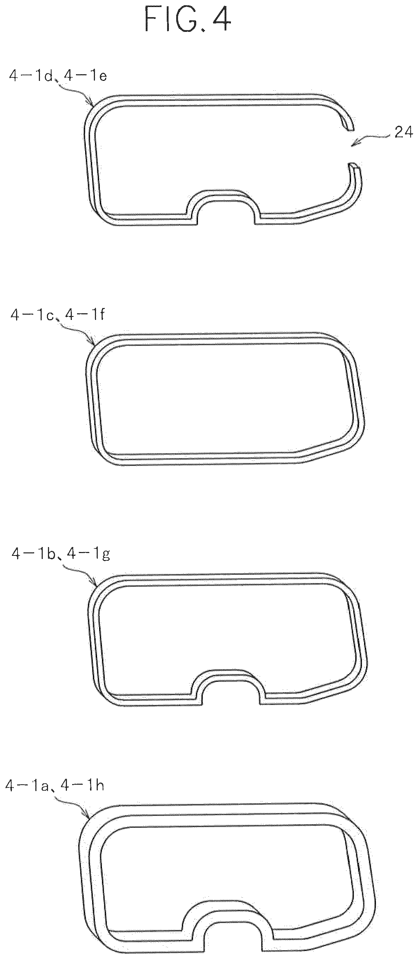

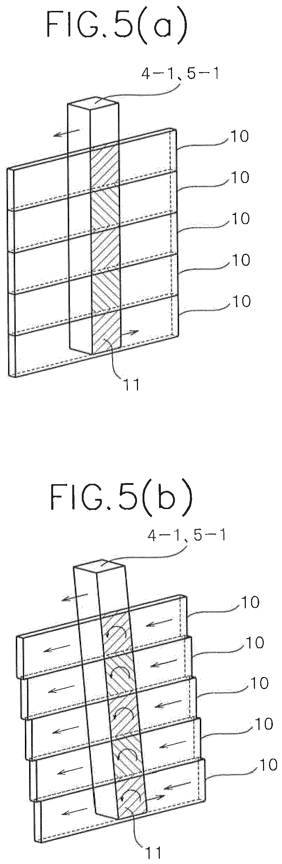

Figs. 1 to 3 are schematic external diagrams showing an embodiment of a wooden house trailer 1 of the present invention, and are the schematic external diagrams when viewing the wooden house trailer 1 from the side in Fig. 1, from the rear in Fig. 2, and from the front in Fig. 3. Further, Fig. 4 is a schematic external diagram showing a plurality of annular wooden columns 4-1a to 4-1h forming a central skeleton portion 4 of the wooden house trailer 1. Further, Fig. 5 is a schematic diagram showing a situation in which a plurality of wooden boards 10 is fixed to the annular wooden columns 4-1 of the central skeleton portion 4 or the wooden columns 5-1 of a side skeleton portion 5 with an elastic adhesive 11.

The wooden house trailer 1 is provided with a wooden living part 3 on a chassis 2 provided with members, such as wheels 2-1 and a towing member 2-2, necessary for towing and transportation, wherein the wooden living part 3 includes at least
a) a central skeleton portion 4 formed by disposing in a front-rear direction a plurality of annular wooden columns 4-1 (4-1a to 4-1h) each formed by bending a wooden column, and fixing the annular wooden columns directly or indirectly to the chassis 2,
b) a side skeleton portion 5 that connects in an up-down direction the annular wooden columns 4-1a and 4-1h disposed on both sides of the central skeleton portion 4 in a left-right direction, where the side skeleton portion includes a plurality of wooden columns 5-1,
c) a front wall portion 6, a ceiling portion 7 and a rear wall portion 8 formed by fixing a plurality of wooden boards 10 with an elastic adhesive 11 in a direction substantially orthogonal to the central skeleton portion 4, and
d) a side wall portion 9 formed by fixing a plurality of wooden boards 10 with an elastic adhesive 11 in a direction substantially orthogonal to the side skeleton portion 5.

In the wooden house trailer 1 shown in Figs. 1 to 3, the annular wooden columns 4-1 (4-1a to 4-1h) forming the central skeleton portion 4 have four types of shapes/structures as shown in Fig. 4, and are disposed in the front-rear direction as shown in Fig. 2 and Fig. 3.

It is preferable that the annular wooden columns 4-1a and 4-1h disposed on both sides of the central skeleton portion 4 in the left-right direction be set to have the width and thickness larger than those of other annular wooden columns (4-1b to 4-1g) in order to structurally firmly support the wooden living part 3. It is preferable that the annular wooden columns 4-1b and 4-1g provided adjacent to the annular wooden columns 4-1a and 4-1h be disposed in close proximity to or preferably in contact with the annular wooden columns 4-1a and 4-1h, respectively, in order to structurally firmly support the wooden living part 3.

When the wooden living part 3 has a window such as a rear window 22 as shown in Fig. 2, each of the annular wooden columns 4-1d and 4-1e disposed at the central portion in the left-right direction has a cutout 24, as shown in Fig. 4, for installing the rear window, and both end portions of the cutout 24 are supported by upper and lower window frames 23 of the rear window 22. Further, both ends of the upper and lower window frames 23 are fixed to the annular wooden columns 4-1c and 4-1f, respectively.

The annular wooden columns 4-1 (4-1a to 4-1h) may be directly fixed to the chassis 2 by a fixing unit such as a bolt/nut, it may be fixed to the bottom plate and/or the floor plate fixed to the chassis 2 by a fixing unit such as a bolt/nut.

By forming a skeleton composed of the central skeleton portion 4 and the side skeleton portion 5 on the chassis 2 in this way, the central skeleton portion 4 and the side skeleton portion 5 can be bent back and forth and left and right.

As the elastic adhesive 11, commercially available elastic adhesives (an excellent adhesive that has an adhesive strength and flexibility) such as a urethane-based adhesive composed of a polyolol base and a polyisodinanate curing agent, and a modified silicone-based adhesive in which a reactive silyl functional group is introduced into polypropylene oxide can be used. By fixing a plurality of wooden boards 10 to the annular wooden columns 4-1 of the central skeleton portion 4 or the wooden columns 5-1 of the side skeleton portion 5 with the elastic adhesive 11, as shown in Fig. 5, even when the central skeleton portion 4 and the side skeleton portion 5 are bent back and forth and left and right, the wooden boards 10 of the wall portion bonded to these skeleton portions 4 and 5 by using the elastic adhesive 11 can follow this.

In the wooden living part 3 of the wooden house trailer 1 of the present invention, the central skeleton portion 4 and the side skeleton portion 5 can be bent back and forth and left and right, and in addition, since the wooden boards 10 of the wall portion bonded to these skeleton portions 4 and 5 using an elastic adhesive 11 can also follow this, flexibility can be imparted to the entire wooden living part 3. Therefore, it is possible to prevent the wooden living part 3 from being damaged by vibration/impact when moving it by towing and transportation. Further, by changing the shape of the wooden living part 3 from the conventional angular one to a rounded one, it is possible to prevent the wooden house trailer 1 from being damaged by wind pressure.

The annular wooden columns 4-1, formed by bending the wooden column, of the central skeleton portion 4 of the wooden house trailer 1 of the present invention are each preferably formed by laminating a plurality of wooden boards 10.

Each of the annular wooden columns 4-1 generally has a thickness of 40 mm to 80 mm, a width of 45 mm to 80 mm, and a length of 7,000 mm to 9,000 mm, in order to be curved easily by heating and have flexibility while ensuring strength, it is preferable to form them by laminating them with the seams appropriately shifted after heating and bending a wood with a thickness of 6 mm, a width of 80 mm, and a length of about 2,000 mm.

In consideration of the strength, flexibility, etc. required for the wooden house trailer 1, the central skeleton portion 4 can have an appropriate number of annular wooden columns 4-1 (4-1a to 4-1h) in an appropriate arrangement each having an appropriate thickness and width. From the viewpoint of the strength, flexibility, etc. of the wooden house trailer 1, the annular wooden columns 4-1 (4-1a to 4-1h) are preferably disposed in parallel.

For example, component members such as a door 20 and a side window 21 as shown in Fig. 1 can be installed between the side wooden columns 5-1 of the side skeleton portion 5. In addition, as described above, for example, the component members such as the rear window 22 as shown in Fig. 2 can be installed by providing the cutout 24 in the annular wooden columns 4-1d and 4-1e disposed at the central portion in the left-right direction. The component members such as the door 20, the side window 21, and the rear window 22 are fixed to the central skeleton portion 4 or the side skeleton portion 5 by frames provided on the top, bottom, left, and right.

The elastic adhesive 11 is used in order to fix the plurality of wooden boards 10 to the annular wooden columns 4-1 of the central skeleton portion 4 or the wooden columns 5-1 of the side skeleton portion 5. When strength is required, a fixing unit such as a bolt/nut can be used together.

The wooden living part 3 of the wooden house trailer 1 of the present invention described above is manufactured by the following process:
a) forming the central skeleton portion 4 by disposing in a front-rear direction the plurality of annular wooden columns 4-1(4-1a to 4-1h) each formed by bending a wooden column on the chassis 2 provided with members, such as wheels 2-1 and the towing member 2-2, necessary for towing and transportation, and fixing the annular wooden columns directly or indirectly to the chassis 2,
b) forming the side skeleton portion 5 that connects in an up-down direction by the plurality of wooden columns 5-1 the annular wooden columns 4-1a and 4-1h disposed on both sides of the central skeleton portion 4 in a left-right direction,
c) forming the front wall portion 6, the ceiling portion 7 and the rear wall portion 8 by fixing the plurality of wooden boards 10 with the elastic adhesive 11 in a direction substantially orthogonal to the central skeleton portion 4, and
d) forming the side wall portion 9 by fixing the plurality of wooden boards 10 with the elastic adhesive 11 in a direction substantially orthogonal to the side skeleton portion 5.

In the manufacturing method of such a wooden house trailer 1, it is possible to manufacture the wooden house trailer 1 with flexibility and a rounded shape, and having reduced damage during towing and transportation.

Also, as explained above it is possible to manufacture the wooden house trailer 1 that exerts a better effect by
1) forming the annular wooden columns 4-1 each formed by bending a wooden column where the annular wooden columns 4-1 are each formed by laminating a plurality of wooden boards 10,
2) forming the central skeleton portion 4 by disposing the annular wooden columns 4-1 each formed by bending the wooden column in parallel,
3) fixing the plurality of wooden boards 10 to the central skeleton portion 4 and the side skeleton portion 5 by using an elastic adhesive 11 and a fixing unit such as a bolt/nut.

### <Other structures and component members>

In the above description, the main features of the present invention have been described. The wooden living part 3 of the wooden house trailer 1 can further include the following structures and component members.

The front wall portion 6, the ceiling portion 7, and the rear wall portion 8 are preferably provided on both the inner and outer sides of the central skeleton portion 4, and the side wall portions 9 are preferably provided on both the inner and outer sides of the side skeleton portion 5. Further, in order to ensure waterproofness, it is preferable to seal the gap between these members with a silicone-based, urethane-based, acrylic-based, or modified silicone-based caulking agent/sealing agent.

In addition, a wooden frame can be fixed to the bottom portion of the wooden living part 3 in the front-rear direction of chassis 2 with a fixing unit such as a bolt/nut, and a bottom plate and/or a floor plate can be provided by fixing the plurality of wooden boards 10 in a direction substantially orthogonal to the wooden frame by using an elastic adhesive 11 and, when necessary, a fixing unit such as a bolt/nut.

Further, in order to further improve waterproofness, one wooden board such as a cedar board may be fixed to the upper part of the ceiling portion 7 of the wooden living part 3 with an elastic adhesive to provide a waterproof roof. Also, as in the ceiling portion 7, in order to further improve waterproofness of the front wall portion 6, the rear wall portion 8 and the side wall portion 9, a wooden board such as a cedar board can be fixed with an elastic adhesive to provide a waterproof wall.

Furthermore, a mounting frame can be provided between the annular wooden columns 4-1 of the central skeleton portion 4 and between the wooden columns 5-1 of the side skeleton portion 5, and the component members such as the door 20, the side window 21, and the rear window 22 can be installed.

### <Effects of the present invention>

In this way, in the wooden living part of the wooden house trailer of the present invention, the central skeleton portion and the side skeleton portion can be bent back and forth and left and right, and in addition, since the wooden boards of the wall portion bonded to these skeleton portions using an elastic adhesive can also follow this, flexibility can be imparted to the entire wooden living part. Therefore, it is possible to prevent the wooden living part from being damaged by vibration/impact when moving it by towing and transportation. Further, by changing the shape of the wooden living part from the conventional angular one to a rounded one, it is possible to prevent the wooden living part from being damaged by wind pressure.

Further, the method of manufacturing a wooden house trailer of the present invention makes it possible to manufacture a wooden house trailer having an excellent effect as described above.

### Reference Signs List

- 1: wooden house trailer
- 2: chassis
- 2-1: wheel
- 2-2: towing member
- 3: wooden living part
- 4: central skeleton portion
- 4-1, 4-1a to 4-1h: annular wooden columns (formed by bending wooden columns)
- 5: side skeleton portion
- 5-1: wooden column of side skeleton portion
- 6: front wall portion
- 7: ceiling portion
- 8: rear wall portion
- 9: side wall portion
- 10: wooden board (forming front wall portion, ceiling portion, rear wall portion, or side wall portion)
- 11: elastic adhesive
- 20: door
- 21: side window
- 22: rear window
- 23: upper and lower window frames (of rear window)
- 24: cutout (for rear window installation)
- 30: conventional wooden house trailer

## Claims

1. A wooden house trailer (1) provided with a wooden living part (3) on a chassis (2) provided with members, such as wheels (2-1) and a towing member (2-2), necessary for towing and transportation, wherein
the wooden living part (3) includes at least
a central skeleton portion (4) formed by disposing in a front-rear direction a plurality of annular wooden columns (4-1) each formed by bending a wooden column, and fixing the annular wooden columns (4-1) directly or indirectly to the chassis (2),
a side skeleton portion (5) that connects in an up-down direction the annular wooden columns (4-1a, 4-1h) disposed on both sides of the central skeleton portion (4) in a left-right direction, the side skeleton portion (5) including a plurality of wooden columns (5-1),
a front wall portion (6), a ceiling portion (7) and a rear wall portion (8) formed by fixing a plurality of wooden boards (10) with an elastic adhesive in a direction substantially orthogonal to the central skeleton portion (4), and
a side wall portion (9) formed by fixing a plurality of wooden boards (10) with an elastic adhesive in a direction substantially orthogonal to the side skeleton portion (5).

2. The wooden house trailer according to claim 1, wherein the annular wooden columns (4-1) are each formed by laminating a plurality of wooden boards (10).

3. The wooden house trailer according to claim 1 or 2, wherein the central skeleton portion (4) is formed by disposing the plurality of annular wooden columns (4-1) in parallel.

4. The wooden house trailer according to any one of claims 1 to 3, wherein the plurality of wooden boards (10) is fixed to the central skeleton portion (4) and the side skeleton portion (5) by using an elastic adhesive and a fixing unit such as a bolt/nut.

5. A method of manufacturing the wooden house trailer according to any one of claims 1 to 4, the method comprising at least:
1) forming a central skeleton portion (4) by disposing in a front-rear direction a plurality of annular wooden columns (4-1) each formed by bending a wooden column on a chassis (2) provided with members, such as wheels (2-1) and a towing member (2-2), necessary for towing and transportation, and fixing the annular wooden columns (4-1) directly or indirectly to the chassis (2);
2) forming a side skeleton portion (5) that connects in an up-down direction by a plurality of wooden columns (5-1) the annular wooden columns (4-1a, 4-1h) disposed on both sides of the central skeleton portion (4) in a left-right direction;
3) forming a front wall portion (6), a ceiling portion (7) and a rear wall portion (8) by fixing a plurality of wooden boards (10) with an elastic adhesive in a direction substantially orthogonal to the central skeleton portion (4); and
4) forming a side wall portion (9) by fixing a plurality of wooden boards (10) with an elastic adhesive in a direction substantially orthogonal to the side skeleton portion (5).

6. The method of manufacturing the wooden house trailer according to claim 5, wherein the annular wooden columns (4-1) are each formed by laminating a plurality of wooden boards (10).

7. The method of manufacturing the wooden house trailer according to claim 5 or 6, wherein the central skeleton portion (4) is formed by disposing the plurality of annular wooden columns (4-1) in parallel.

8. The method of manufacturing the wooden house trailer according to any one of claims 5 to 7, wherein the plurality of wooden boards (10) is fixed to the central skeleton portion (4) and the side skeleton portion (5) by using an elastic adhesive and a fixing unit such as a bolt/nut.

## Patentansprüche

1. Holzwohnwagen (1), der mit einem Wohnraum aus Holz (3) auf einem Chassis (2) versehen ist, das mit Elementen wie Rädern (2-1) und einem Anhängerkupplungselement (2-2), das zum Schleppen und Transportieren erforderlich ist, versehen ist, wobei
der Wohnraum aus Holz (3) mindestens Folgendes beinhaltet
einen zentralen Gerüstabschnitt (4), der durch Anordnen in einer Vorwärts-Rückwärts-Richtung einer Vielzahl ringförmiger Holzsäulen (4-1), die jeweils durch Biegen einer Holzsäule gebildet werden, und Befestigen der ringförmigen Holzsäulen (4-1) direkt oder indirekt an dem Chassis (2) gebildet wird,
einen Seitengerüstabschnitt (5), der die ringförmigen Holzsäulen (4-1a, 4-1h), die an beiden Seiten des zentralen Gerüstabschnitts (4) in einer Links-Rechts-Richtung angeordnet sind, in einer Aufwärts-Abwärts-Richtung verbindet, wobei der Seitengerüstabschnitt (5) eine Vielzahl von Holzsäulen (5-1) beinhaltet,
einen Vorderwandabschnitt (6), einen Deckenabschnitt (7) und einen Rückwandabschnitt (8), die durch Befestigen einer Vielzahl von Holzplatten (10) mit einem elastischen Klebstoff in einer Richtung im Wesentlichen orthogonal zu dem zentralen Gerüstabschnitt (4) gebildet werden, und
einen Seitenwandabschnitt (9), der durch Befestigen einer Vielzahl von Holzplatten (10) mit einem elastischen Klebstoff in einer Richtung im Wesentlichen orthogonal zu dem Seitengerüstabschnitt (5) gebildet wird.

2. Holzwohnwagen nach Anspruch 1, wobei die ringförmigen Holzsäulen (4-1) jeweils durch Laminieren einer Vielzahl von Holzplatten (10) gebildet werden.

3. Holzwohnwagen nach Anspruch 1 oder 2, wobei der zentrale Gerüstabschnitt (4) durch paralleles Anordnen der Vielzahl ringförmiger Holzsäulen (4-1) gebildet wird.

4. Holzwohnwagen nach einem der Ansprüche 1 bis 3, wobei die Vielzahl von Holzplatten (10) an dem zentralen Gerüstabschnitt (4) und dem Seitengerüstabschnitt (5) mit Hilfe eines elastischen Klebstoffs und einer Befestigungseinheit wie einem Bolzen/einer Mutter befestigt wird.

5. Verfahren zum Herstellen des Holzwohnwagens nach einem der Ansprüche 1 bis 4, wobei das Verfahren mindestens Folgendes umfasst:
1) Bilden eines zentralen Gerüstabschnitts (4) durch Anordnen in einer Vorwärts-Rückwärts-Richtung einer Vielzahl ringförmiger Holzsäulen (4-1), die jeweils durch Biegen einer Holzsäule gebildet werden, an einem Chassis (2), das mit Elementen wie Rädern (2-1) und einem Anhängerkupplungselement (2-2), das zum Schleppen und Transportieren erforderlich ist, versehen ist, und Befestigen der ringförmigen Holzsäulen (4-1) direkt oder indirekt an dem Chassis (2);
2) Bilden eines Seitengerüstabschnitts (5), der durch eine Vielzahl von Holzsäulen (5-1) die ringförmigen Holzsäulen (4-1a, 4-1h), die an beiden Seiten des zentralen Gerüstabschnitts (4) in einer Links-Rechts-Richtung angeordnet sind, in einer Aufwärts-Abwärts-Richtung verbindet;
3) Bilden eines Vorderwandabschnitts (6), eines Deckenabschnitts (7) und eines Rückwandabschnitts (8) durch Befestigen einer Vielzahl von Holzplatten (10) mit einem elastischen Klebstoff in einer Richtung im Wesentlichen orthogonal zu dem zentralen Gerüstabschnitt (4); und
4) Bilden eines Seitenwandabschnitts (9) durch Befestigen einer Vielzahl von Holzplatten (10) mit einem elastischen Klebstoff in einer Richtung im Wesentlichen orthogonal zu dem Seitengerüstabschnitt (5).

6. Verfahren zum Herstellen des Holzwohnwagens nach Anspruch 5, wobei die ringförmigen Holzsäulen (4-1) jeweils durch Laminieren einer Vielzahl von Holzplatten (10) gebildet werden.

7. Verfahren zum Herstellen des Holzwohnwagens nach Anspruch 5 oder 6, wobei der zentrale Gerüstabschnitt (4) durch paralleles Anordnen der Vielzahl ringförmiger Holzsäulen (4-1) gebildet wird.

8. Verfahren zum Herstellen des Holzwohnwagens nach einem der Ansprüche 5 bis 7, wobei die Vielzahl von Holzplatten (10) an dem zentralen Gerüstabschnitt (4) und dem Seitengerüstabschnitt (5) mit Hilfe eines elastischen Klebstoffs und einer Befestigungseinheit wie einem Bolzen/einer Mutter befestigt wird.

## Revendications

1. Caravane en bois (1) pourvue d'une partie de vie en bois (3) sur un châssis (2) pourvu d'éléments, tels que des roues (2-1) et d'un élément de remorquage (2-2), nécessaires pour le remorquage et le transport, dans laquelle
la partie de vie en bois (3) inclut au moins
une partie de squelette centrale (4) formée en disposant, dans une direction avant-arrière, une pluralité de colonnes annulaires en bois (4-1), chacune étant formée en pliant une colonne en bois et en fixant les colonnes annulaires en bois (4-1) directement ou indirectement au châssis (2),
une partie de squelette latérale (5) qui relie, dans une direction haut-bas, les colonnes annulaires en bois (4-1a, 4-1h) disposées des deux côtés de la partie de squelette centrale (4) dans une direction gauche-droite, la partie de squelette latérale (5) incluant une pluralité de colonnes en bois (5-1),
une partie de paroi avant (6), une partie de plafond (7) et une partie de paroi arrière (8) formées en fixant une pluralité de panneaux en bois (10) avec un adhésif élastique dans une direction sensiblement orthogonale à la partie de squelette centrale (4) et
une partie de paroi latérale (9) formée en fixant une pluralité de panneaux en bois (10) avec un adhésif élastique dans une direction sensiblement orthogonale à la partie de squelette latérale (5).

2. Caravane en bois selon la revendication 1, dans laquelle les colonnes annulaires en bois (4-1) sont chacune formées en stratifiant une pluralité de panneaux en bois (10).

3. Caravane en bois selon la revendication 1 ou 2, dans laquelle la partie de squelette centrale (4) est formée en disposant la pluralité de colonnes annulaires en bois (4-1) en parallèle.

4. Caravane en bois selon l'une quelconque des revendications 1 à 3, dans laquelle la pluralité de panneaux en bois (10) est fixée à la partie de squelette centrale (4) et à la partie de squelette latérale (5) en utilisant un adhésif élastique et une unité de fixation telle qu'un boulon/écrou.

5. Procédé de fabrication de la caravane en bois selon l'une quelconque des revendications 1 à 4, le procédé comprenant au moins :
1) la formation d'une partie de squelette centrale (4) en disposant, dans une direction avant-arrière, une pluralité de colonnes annulaires en bois (4-1), chacune étant formée en pliant une colonne en bois sur un châssis (2) pourvu d'éléments, tels que des roues (2-1) et d'un élément de remorquage (2-2), nécessaires pour le remorquage et le transport, et en fixant les colonnes annulaires en bois (4-1) directement ou indirectement au châssis (2) ;
2) la formation d'une partie de squelette latérale (5) qui relie, dans une direction haut-bas, au moyen d'une pluralité de colonnes en bois (5-1), les colonnes annulaires en bois (4-1a, 4-1h) disposées des deux côtés de la partie de squelette centrale (4) dans une direction gauche-droite ;
3) la formation d'une partie de paroi avant (6), d'une partie de plafond (7) et d'une partie de paroi arrière (8) en fixant une pluralité de panneaux en bois (10) avec un adhésif élastique dans une direction sensiblement orthogonale à la partie de squelette centrale (4) ; et
4) la formation d'une partie de paroi latérale (9) en fixant une pluralité de panneaux en bois (10) avec un adhésif élastique dans une direction sensiblement orthogonale à la partie de squelette latérale (5).

6. Procédé de fabrication de la caravane en bois selon la revendication 5, dans lequel les colonnes annulaires en bois (4-1) sont chacune formées en stratifiant une pluralité de panneaux en bois (10).

7. Procédé de fabrication de la caravane en bois selon la revendication 5 ou 6, dans lequel la partie de squelette centrale (4) est formée en disposant la pluralité de colonnes annulaires en bois (4-1) en parallèle.

8. Procédé de fabrication de la caravane en bois selon l'une quelconque des revendications 5 à 7, dans lequel la pluralité de panneaux en bois (10) est fixée à la partie de squelette centrale (4) et à la partie de squelette latérale (5) en utilisant un adhésif élastique et une unité de fixation telle qu'un boulon/écrou.
